# EUROPÄISCHE PATENTSCHRIFT

(11) **EP 2 913 651 B1**
(45) Veröffentlichungstag und Bekanntmachung des Hinweises auf die Patenterteilung: **16.05.2018**
(21) Anmeldenummer: 15156689.0
(22) Anmeldetag: 26.02.2015
(51) Int. Cl.: G01L 19/06, G01L 19/14

(54) **Druckmessumformer mit Druckausgleichsvorrichtung**
Pressure transducer with a pressure relief device
Convertisseur de pression doté d'un dispositif d'équilibrage de pression

(30) Priorität: 26.02.2014 DE 102014102483
(43) Veröffentlichungstag der Anmeldung: 02.09.2015
(73) Patentinhaber: VEGA Grieshaber KG, 77709 Wolfach (DE)
(72) Erfinder: Kopp, Thomas, 77709 Wolfach (DE)
(74) Vertreter: Westphal, Mussgnug & Partner Patentanwälte mbB

(56) Entgegenhaltungen:
- WO-A2-2004/090494
- US-A- 4 414 851

## Beschreibung

Die vorliegende Erfindung betrifft einen Druckmessumformer zum Bestimmen eines Drucks in einer Baueinheit, beispielsweise einem Behälter , umfassend ein Gehäuse mit einer Wandung, welche einen Hohlraum umschließt, eine im Hohlraum angeordnete Druckmesszelle zum Bestimmen des in der Baueinheit anliegenden Drucks und zum Erzeugen von entsprechenden Signalen, wobei die Wandung eine Öffnung aufweist, über welche die Druckzelle mit dem in der Baueinheit anliegenden Druck beaufschlagbar ist, und wobei die Druckmesszelle so im Hohlraum angeordnet ist, dass auf der von der Öffnung abgewandten Seite der Druckmesszelle ein Druckraum gebildet wird, in welchem ein zweiter Druck anliegt, eine mit der Druckmesszelle zusammenwirkende Umwandlungseinheit zum Umwandeln der Signale in elektrische Signale, eine elektrische Leitungseinrichtung zum Weiterleiten der elektrischen Signale an eine Auswerteeinheit, und eine druckdichte Durchführungseinrichtung zum Durchführen der elektrischen Leitungseinrichtung durch die Wandung. Druckmessumformer sind beispielsweise aus der DE 10 2006 049 942 oder der DE 10 2007 039 297 B3 bekannt. Ein Druckmessumformer dient zur Bestimmung eines Drucks in einer Baueinheit, beispielsweise in einem Behälter, einem Reaktor oder in einer Rohrleitung. Dabei weist der Druckmessumformer eine Druckmesszelle auf, die mit dem unter Druck stehenden Medium, typischerweise ein Fluid, beaufschlagbar ist. Die Druckmesszelle weist in vielen Fällen eine Membran auf, die unter der Einwirkung des Drucks ausgelenkt wird, wobei aus dem Maß der Auslenkung auf den einwirkenden Druck geschlossen werden kann. Das Maß der Auslenkung kann als ein mechanisches Signal aufgefasst werden. Die Druckmesszelle wirkt mit einer Umwandlungseinheit zusammen, welche das mechanische Signal, beispielsweise die Auslenkung, in ein elektrisches Signal umwandelt, welches dann über eine elektrische Leitungseinrichtung zu einer Auswerteeinheit weitergeleitet wird. Die Auswerteeinheit kann Teil eines Steuerungs- oder Regelungssystems sein, welches andere Parameter, beispielsweise die Temperatur im Reaktor, ändert, wenn der gemessene Druck ein bestimmtes Maß unter- oder übersteigt.

Weitere Druckmessumformer sind aus der US 4 414 851 A und WO 2004/090494 bekannt. Eine auch in der DE 10 2006 049 942 A1 behandelte Problematik stellt der Einsatz der Druckmessumformer in explosionsgefährdeten Bereichen ("Ex-Bereiche") dar. Hierzu müssen die Druckmessumformer spezielle Anforderungen erfüllen, welche die Weiterleitung von Explosionen verhindern oder zumindest eindämmen, um die Ausbreitung von Schäden zu verhindern. Ein wichtiger Punkt ist die Eindämmung der Druckausbreitung, die mit einer Explosion einhergeht. Die Druckausbreitung kann beispielsweise dadurch eingedämmt werden, dass druckdichte Durchführungseinrichtungen verwendet werden, mit denen die elektrischen Leitungen durch die Wandung des Gehäuses des Druckmessumformers geführt werden. Druckdichte Durchführungseinrichtungen werden vorzugsweise unter Verwendung von Glas oder Glasloten realisiert.

Die gattungsgemäßen Druckmessumformer werden üblicherweise zur Bestimmung des Atmosphärenüberdrucks bzw. Relativdrucks eingesetzt, wobei auch eine Bestimmung des Differenzdrucks beispielsweise zwischen zwei Baueinheiten möglich ist. Bei der Bestimmung des Relativdrucks muss eine Kompensation für Schwankungen des Umgebungsdrucks vorgesehen sein. Eine Vielzahl von Druckmessumformern weist außerdem ein Elektronikgehäuse auf, welches rückseitig und drehbar am übrigen Gehäuse des Druckmessumformers befestigt ist und durch eine Wandung vom übrigen Gehäuse getrennt ist. Das Elektronikgehäuse ist hierzu mittels eines Gehäuseadapters drehbar am übrigen Gehäuse befestigt, wobei der Gehäuseadapter einen Spalt zum Gehäuse aufweist, der mittels eines O-Rings abgedichtet wird.

Um die Leitungseinrichtung mit elektrischen Leitungen durch die Wandung zu führen, ist eine Durchführungseinrichtung notwendig, die im Stand der Technik nicht druckdicht sind. Zum Druckausgleich wird eine Druckausgleichseinrichtung verwendet. Wenn die Druckausgleichseinrichtung in das Elektronikgehäuse eingeschraubt wird, kann einerseits ein Druckausgleich über die nicht druckdichte Durchführungseinrichtung in das Elektronikgehäuse erfolgen und andererseits die Druckausgleichseinrichtung durch Drehen des Elektronikgehäuses so positioniert werden, dass sie beispielsweise vor Verschmutzungen bestmöglich geschützt ist. Da bei Verwendung von druckdichten Durchführungseinrichtungen kein Druckausgleich mehr über die Durchführungseinrichtung möglich ist, können die herkömmlichen Druckmessumformer nicht mehr verwendet werden.

Aufgabe der vorliegenden Erfindung ist es, einen Druckmessumformer anzugeben, welcher den oben beschriebenen Nachteilen begegnet und welcher es insbesondere ermöglicht, die Druckausgleichseinrichtung auch dann so positionieren zu können, dass sie bestmöglich geschützt ist, wenn der Druckmessumformer druckdichte Durchführungseinrichtungen aufweist.

Gelöst wird die Aufgabe durch einen Druckmessumformer gemäß Anspruch 1. Bevorzugte Ausführungsformen sind Gegenstand der Unteransprüche.

Beim erfindungsgemäßen Druckmessumformer ist eine die Wandung durchlaufende Bohrung vorgesehen, welche mit dem Druckraum und einer mittels einer Verstelleinheit in ihrer Position verstellbaren Druckausgleichseinrichtung kommuniziert. Der Druckraum, der sich der Seite der Druckmesszelle anschließt, die nicht mit dem Druck des Bauteils beaufschlagt ist, kann einerseits entlüftet werden, so dass Schwankungen des Umgebungsdrucks kompensiert werden können. Andererseits ist es mittels der Verstelleinheit dennoch möglich, die Druckausgleichseinrichtung so zu positionieren, dass sie vor Verschmutzung bestmöglich geschützt ist. Dabei kann die Verstelleinheit auf jede Weise ausgestaltet sein, welche es ermöglicht, die Position der Druckausgleichseinrichtung zielgerichtet zu verändern. Beispielsweise kann ein Schlauch verwendet werden, an dessen einem Ende die Druckausgleichseinheit angeschlossen ist und dessen anderes Ende die Bohrung umschließt, wobei der Schlauch so ausgestaltet ist, dass er zwar in seiner Ausrichtung veränderbar ist, die einmal gewählte Ausrichtung im Betrieb des Druckmessumformers aber beibehalten wird. Durch die veränderbare Anordnung der Druckausgleichseinrichtung kann sie vor einer Verschmutzung geschützt werden, was insbesondere deshalb wichtig ist, da ein Zusetzen der Druckausgleichseinrichtung mit Schmutz die Kompensation für Schwankungen des Umgebungsdrucks behindern oder ganz unmöglich machen kann, so dass es zu signifikanten Messfehlern bei der Bestimmung des Relativdrucks kommen kann. Die erfindungsgemäße Verstelleinrichtung macht eine drehbare Anordnung des Elektronikgehäuses am übrigen Gehäuse, wie dies im Stand der Technik notwendig ist, überflüssig, was den Aufbau vereinfacht. Es ist darüber hinaus möglich, das Elektronikgehäuse in das übrige Gehäuse zu integrieren, was den Fertigungsaufwand weiter vereinfacht.

In einer Weiterbildung des erfindungsgemäßen Druckmessumformers umfasst die Verstelleinheit einen die Wandung umgreifenden Ring. In dieser Ausgestaltung der Verstelleinheit kann diese relativ einfach gefertigt sowie am Druckmessumformer montiert und wieder demontiert werden. Zudem ist die Position des Rings dadurch, dass er die Wandung umgreift, zumindest axial festgelegt, so dass keine aufwendigen Maßnahmen zur Positionierung ergriffen werden müssen. Der Ring muss dabei nicht zwingend einen kreisförmigen Abschnitt aufweisen und kann auch zweiteilig ausgestaltet sein.

Vorzugsweise wirkt der Ring mit einer Dichteinrichtung derart zusammen, dass die Bohrung gegenüber dem Ring abdichtbar ist. Zwar können der Ring und die Wandung so gestaltet sein, dass sie eine Spaltringdichtung bilden und somit keine zusätzliche Dichteinrichtung benötigt wird, jedoch erfordert dies eine sehr genaue Fertigung. Die Dichteinrichtung kann hingegen so ausgestaltet werden, dass sie einfach herstellbar und auf die Umgebungsbedingungen angepasst ist. Ferner kann sie so gestaltet sein, dass sie für den Fall eines Schadens schnell ausgetauscht werden kann.

Es ist bevorzugt, wenn die Wandung eine im Wesentlichen hohlzylindrische Form mit einer Mantelfläche aufweist und der Ring auf die Mantelfläche aufschiebbar ist. Die Ausgestaltung der Wandung mit einer hohlzylindrischen Form ist aus fertigungstechnischer Sicht sehr günstig, da eine rotationssymmetrische Gestaltung ermöglicht wird. Der Ring weist eine Innenfläche auf, die dem Verlauf der Mantelfläche folgt, so dass er auf die Mantelfläche aufschiebbar ist. Die Innenfläche ist vorzugsweise gefräst. Hierdurch lassen sich die Montage und die Demontage des Rings deutlich vereinfachen. Auch die Gestaltung des Rings ist zumindest teilweise rotationssymmetrisch, was dessen Fertigung vereinfacht. Dabei ist der Ring um eine Längsachse des Hohlraums drehbar gelagert. Folglich wird es insbesondere aus fertigungstechnischer Sicht auf einfache Weise ermöglicht, die Position der Druckausgleichseinrichtung zu verändern, so dass sie insbesondere vor Verschmutzungen geschützt ist.

In einer bevorzugten Ausgestaltung des erfindungsgemäßen Druckmessumformers umfasst die Dichteinrichtung einen ersten O-Ring und einen zweiten O-Ring, die einen Dichtraum definieren, der mit der Bohrung kommuniziert. Die O-Ringe können als Gleitflächen für den Ring dienen, auf denen er gedreht werden kann. Hierzu können die O-Ringe mit Gleitstoffen wie Polytetrafluorethylen (PTFE) beschichtet sein, um das Gleiten des Rings zu verbessern. Insbesondere kann auch der Stick-Slip-Effekt vermieden werden, womit das ruckartige Gleiten beschrieben wird, was beispielsweise bei Scheibenwischern von Kraftfahrzeugen auftritt, wenn nur wenige Regentropfen die Windschutzscheibe benetzen. Die Vorspannung der O-Ringe sollte so gewählt werden, dass einerseits der Ring noch mit zumutbarem Kraftaufwand gedreht werden kann, andererseits aber eine ausreichende Pressung vorliegt, um den Dichtraum sicher abzudichten. O-Ringe stellen ein zuverlässiges und in vielen Ausgestaltungen erhältliches und kostengünstiges Bauteil dar, so dass die Dichteinrichtung in dieser Ausgestaltung besonders vorteilhaft realisierbar ist.

Vorteilhaft weist die Wandung im Dichtraum eine erste ringförmige Ausnehmung auf. Additiv oder alternativ weist der Ring eine zweite ringförmige Ausnehmung auf, die im Dichtraum angeordnet ist, wenn sich der Ring in seiner Gebrauchsstellung befindet. Die ringförmigen Ausnehmungen durchlaufen dabei vorzugsweise die Innenfläche des Rings und/oder die Mantelfläche der Wandung vollständig und sind in sich geschlossen. Die ringförmigen Ausnehmungen stellen sicher, dass unabhängig von der Drehstellung des Rings relativ zur Bohrung eine Kommunikation zwischen dem Druckraum und der Druckausgleichseinrichtung hergestellt ist. Hierdurch wird weiterhin die Kompensation für Schwankungen des Umgebungsdrucks unabhängig von der Drehstellung des Rings sichergestellt.

Dabei ist es bevorzugt, dass der Ring mit Positionierungsmitteln in seiner Gebrauchsstellung positioniert wird. Die Positionierungsmittel können auf jede denkbare Weise ausgestaltet sein, die eine einfache Positionierung des Rings ermöglichen. So können sie klappbar oder steckbar ausgestaltet sein. Vorzugsweise umfassen die Positionierungsmittel jedoch einen Anschlag, gegen den der Ring in seiner Gebrauchsstellung anschlägt. Diese Ausgestaltung bietet sich insbesondere dann an, wenn der Ring auf die Wandung aufgeschoben wird. Der Anschlag kann auf die Wandung aufgeschweißt sein oder von ihr gebildet werden. Somit ist die Gebrauchsstellung des Rings festgelegt, wenn der Ring am Anschlag anliegt. Hierdurch wird die Gebrauchsstellung sehr einfach und zuverlässig festgelegt. In diesem Fall ist aber die Stellung axial nur zu einer Seite festgelegt. Daher können die Positionierungsmittel einen oder mehrere Sicherungsringe umfassen, mit welchen der Ring in seiner Gebrauchsstellung fixierbar ist. Die Sicherungsringe können beispielsweise als handelsüblicher Runddrahtring ausgestaltet sein. Wenn ein Anschlag vorgesehen ist, genügt ein Sicherungsring an dem Ende, welches dem Anschlag gegenüberliegt, um den Ring zu fixieren. Wenn kein Anschlag vorgesehen ist, kann ein erster Sicherungsring die Funktion des Anschlags übernehmen, während der zweite Sicherungsring zusammen mit dem ersten Sicherungsring den Ring fixiert. In beiden Fällen wird die Drehbarkeit des Rings nicht beeinträchtigt. Diese Weise der Fixierung des Rings lässt sich fertigungstechnisch einfach realisieren und ermöglicht die einfache Montage und Demontage des Rings. Auch wenn hierdurch der Ring nur drehbar und nicht axial verschiebbar ist, wird dennoch ein guter Schutz vor Verschmutzung erreicht, da der Schmutz aus einer bestimmten Richtung kommt. Das Gehäuse schützt die Druckausgleichseinrichtung vor einer Verschmutzung. Ein axial verschiebbarer Ring ist aber auch denkbar.

Weiterhin umfasst der Ring vorteilhafterweise einen Anschlussabschnitt, an den die Druckausgleichseinrichtung befestigbar oder mit dem der Ring mit einer weiteren Baueinheit verbindbar ist. Der Anschlussabschnitt kann dabei so gewählt werden, dass eine handelsübliche Druckausgleichseinrichtung verwendet werden kann, die im Schadensfall schnell ausgetauscht werden kann. Hierzu ist es vorteilhaft, eine Gewindeverbindung zwischen dem Anschlussabschnitt und der Druckausgleichseinrichtung vorzusehen. Wenn der Druckmessumformer nicht zur Bestimmung des Relativdrucks verwendet werden soll, sondern zur Bestimmung eines Differenzdrucks, kann über den Anschlussabschnitt beispielsweise ein Schlauch angeschlossen werden, welcher mit einer weiteren Baueinheit in Kommunikation steht. Hierdurch liegt im Druckraum der Druck an, der auch in der weiteren Baueinheit vorliegt, so dass der Druckmessumformer den Differenzdruck zwischen den beiden Baueinheiten misst. Der Anschlussabschnitt erhöht somit die Einsatzmöglichkeiten des erfindungsgemäßen Druckmessumformers.

In einer bevorzugten Ausgestaltung ist die Druckmesszelle in einer auf das Gehäuse aufschraubbaren Gewindemuffe angeordnet, die als Prozessanschluss dient. Ein typischer Einsatzbereich des erfindungsgemäßen Druckmessumformers stellen Druckbehälter dar. Die Druckmessumformer werden in eine Durchgangsöffnung der Wandung des Druckbehälters eingesetzt. Die Befestigung des Druckmessumformers erfolgt dabei häufig mittels eines Einschweißflansches mit einem Innengewinde, in welchen der Druckmessumformer komplett eingeschraubt wird, wie es beispielsweise in der DE 10 2007 039 297 B3 der Fall ist. Der dort beschriebene Druckmessumformer weist kein drehbares Elektronikgehäuse auf. Damit der Druckmessumformer korrekt funktioniert, muss der gesamte Druckmessumformer vollständig in den Einschweißflansch eingeschraubt werden. In dieser Stellung ist aber unter Umständen die typischerweise radial ausgerichtete Druckausgleichseinrichtung in einer Stellung, in welcher sie nicht vor Schmutz geschützt ist. Man muss bei bekannten Druckmessumformern also den Einschweißflansch so ausrichten, dass die Druckausgleichseinrichtung in der gewünschten Stellung ist, wenn der Druckmessumformer vollständig eingeschraubt ist, was insbesondere dann sehr aufwendig ist, wenn ein Druckbehälter nachträglich mit einem Druckmessumformer ausgerüstet werden soll da in diesem Fall der Einschweißflansch vor Ort, d.h. auf dem Betriebsgelände montiert werden muss.

Durch die erfindungsgemäße, in ihrer Position verstellbare Druckausgleichseinrichtung kann der Einschweißflansch bei Verwendung des erfindungsgemäßen Druckmessumformers beliebig ausgerichtet sein und dennoch eine Ausrichtbarkeit der Druckausgleichseinrichtung erreicht werden. Das Elektronikgehäuse muss ferner nicht drehbar sein, was die Fertigung vereinfacht. Auch ist es möglich, die Druckmesszelle in einer Gewindemuffe anzuordnen, auf welche der übrige Druckmessumformer aufgeschraubt werden kann, was die Montage erleichtert, da der Druckmessumformer nicht sofort komplett, sondern abschnittsweise montiert werden kann.

Vorzugsweise ist der Ring aus rostfreiem Stahl, insbesondere aus rostfreiem Edelstahl, oder im Spritz- oder Druckgussverfahren hergestellt. Wenn rostfreier Stahl oder rostfreier Edelstahl verwendet wird, kann der Ring spanend hergestellt werden, was eine relativ kostengünstige Herstellungsweise ist. Zudem wird eine hohe Korrosionsbeständigkeit erzielt. Spritz- und Druckgussverfahren eignen sich insbesondere für hohe Stückzahlen, wobei sich das Druckgussverfahren für metallische Werkstoffe und insbesondere für Leichtmetalle eignet. Das Druckgussverfahren ermöglicht es, den Ring so zu formen, dass ohne eine mechanische Nacharbeit, beispielsweise durch Fräsen oder Bohren, die Druckausgleichseinrichtung direkt in den Ring eingeschraubt werden kann. Das Spritzgussverfahren ist vorzugsweise als Kunststoffspritzguss- oder PulverspritzgussVerfahren ausgebildet.

In einigen Ausbildungen weist die Druckausgleichseinrichtung eine Membran auf. Insbesondere bei Verwendung eines Kunststoffspritzgussverfahrens ergibt sich die Möglichkeit, beispielsweise die Membran im Ring zu umspritzen, so dass die Druckausgleichseinrichtung selbst die Membran nicht mehr umfassen muss, weshalb sie einfacher aufgebaut sein kann. Die Membran selbst ist beispielsweise aus gerecktem oder porösem PTFE oder aus Polyamidvlies beschichtet auf Acrylatbasis gefertigt.

Beim Pulverspritzguss wird ein mit einem Binder versehenes Metall- (MIM: Metal Injection Molding) oder Keramikpulver (CIM: Ceramic Injection Molding) in einem Spritzgussprozess verarbeitet. Der Binder wird anschließend entfernt. Hierdurch ist es möglich, komplex geformte Teile in größeren Stückzahlen mit sehr geringen Toleranzen herzustellen. Bevorzugt wird ein Edelstahlpulver mit einem kohlenstoffhaltigen Trägermaterial als Binder verwendet. Nach Ausbrennen des Trägermaterials hat der Ring eine ähnliche Festigkeit wie ein Ring aus Vollmaterial, wobei keine mechanische Nacharbeit erforderlich ist. Auch das Einschrauben der Druckausgleichseinrichtung direkt in den so hergestellten Ring ist möglich.

Bei allen verwendeten Werkstoffen ist es auch möglich, die Membran nicht in der Druckausgleichseinrichtung anzuordnen, sondern direkt am Ring anzukleben. Die Membran kann außen auf den Ring geklebt werden, wozu selbstklebende Membrane verwendet werden können.

Darüber hinaus ist es auch möglich, eine Membranschutzkappe beispielsweise mittels eines Reibschweißverfahrens am Ring zu befestigen. Hierbei ist die Membranschutzkappe mit Stegen versehen, durch die der Gasaustausch stattfindet. Wiederum kann die Membran eingespritzt, aufgeklebt oder mit einem O-Ring abgedichtet durch einen einschnappenden Ring befestigt sein.

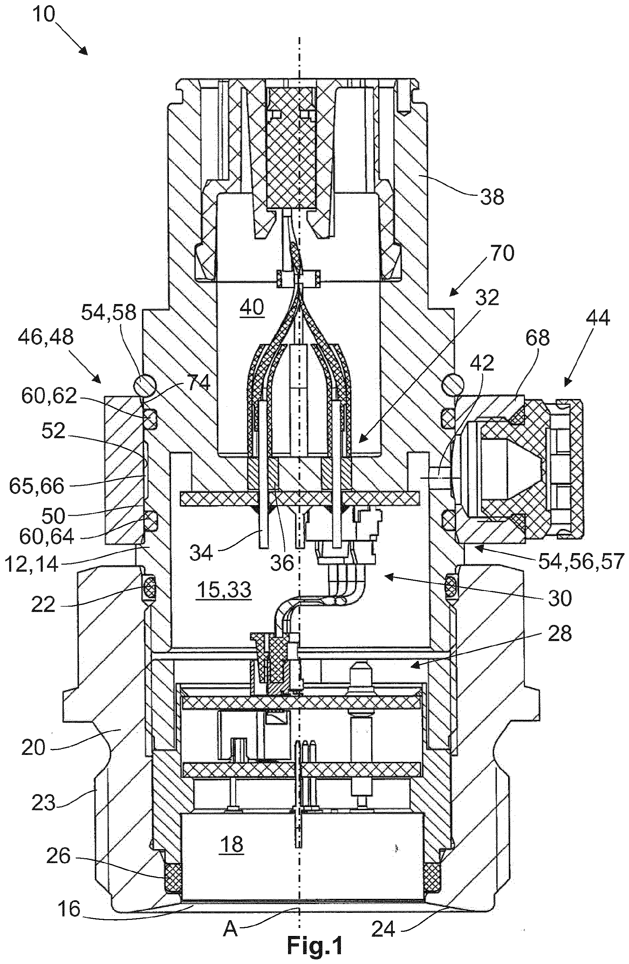

Die Erfindung wird im Folgenden anhand eines bevorzugten Ausführungsbeispiels unter Bezugnahme auf die anhängende Zeichnung im Detail erläutert. Es zeigt
- Figur 1: ein bevorzugtes Ausführungsbeispiel eines erfindungsgemäßen Druckumformers anhand einer Schnittdarstellung.

In Figur 1 ist ein erfindungsgemäßer Druckmessumformer 10 gemäß einem bevorzugten Ausführungsbeispiel dargestellt, welcher ein Gehäuse 12 mit einer Wandung 14 aufweist, die einen Hohlraum 15 mit einer Längsachse A umschließt. Die Wandung 14 weist eine im Wesentlichen hohlzylindrische Form mit einer Öffnung 16 auf, an welcher sich eine im Hohlraum 15 angeordnete Druckmesszelle 18 anschließt. Die Druckmesszelle 18 ist in einer Gewindemuffe 20 befestigt, die als Prozessanschluss dient. In den Prozessanschluss ist rückseitig das Gehäuse 12 mit der Wandung 14 eingeschraubt und mit einem ersten Dichtungselement 22 abgedichtet. Die Gewindemuffe 20 wiederum weist ein Außengewinde 23 auf, mit welchem der Druckmessumformer 10 in eine nicht dargestellte Baueinheit, beispielsweise einen Behälter eingeschraubt werden kann. Insofern bildet die Gewindemuffe 20 den Prozessanschluss. Die Druckmesszelle 18 fluchtet im Wesentlichen mit einer Stirnfläche 24 des Prozessanschlusses, um Toträume, in denen sich von der Baueinheit kommender Schmutz sammeln könnte, so gering wie möglich zu halten. Die Öffnung 16 wird durch die Druckmesszelle 18 abgedichtet, wozu zweite Dichtungselemente 26 vorgesehen sind. An der Seite der Druckmesszelle 18, welche der Öffnung 16 abgewandt ist, ist im Hohlraum 15 eine Umwandlungseinheit 28 angeordnet, die mit der Druckmesszelle 18 zusammenwirkt. Die Umwandlungseinheit 28 nimmt die von der Druckmesszelle 18 in Abhängigkeit vom in der Baueinheit herrschenden Druck erzeugten Signale auf und wandelt sie in elektrische Signale um. Zum Weiterleiten der elektrischen Signale ist die Umwandlungseinheit 28 mit einer Leitungseinrichtung 30 verbunden, die mehrere elektrische Leitungen umfasst und an einer druckdichten Durchführungseinrichtung 32 angeschlossen ist. Die Durchführungseinrichtung 32 dichtet den Hohlraum 15 zur anderen Seite ab. Definitionsgemäß soll der abgedichtete Teil des Hohlraums 15 als Druckraum 33 bezeichnet werden. Die Durchführungseinrichtung 32 weist eine Anzahl von elektrischen Durchführungen in Form von Leitstäben 34 auf, an welche die Leitungseinrichtung 30 angeschlossen werden kann und über welche die elektrischen Signale aus dem Hohlraum 15 abgeleitet werden können. Die Leitstäbe 34 sind mit einer Glasdurchführung 36 in der Durchführungseinrichtung 32 druckdicht und eingeglast befestigt. An den Hohlraum 15 schließt sich rückseitig axial ein Gehäuseadapter 38 an, der eine elektrische und mechanische Verbindung zu einen nicht näher dargestellten Elektronikgehäuse herstellt. Der Gehäuseadapter 38 ist im dargestellten Beispiel als ein separater Hohlraum 40 des Gehäuses 12 ausgebildet, kann aber auch mit der Wandung 14 des Gehäuses 12 verschweißt sein. Im dargestellten Beispiel weist der Hohlraum 40 einen Durchmesser auf, der kleiner als der Durchmesser des Druckraums 33 ist.

Die Wandung 14 weist eine Bohrung 42 auf, welche die Wandung 14 komplett durchdringt und mit dem Druckraum 33 in Kommunikation steht. Die Bohrung 42 kommuniziert nach außen hin mit einer Druckausgleichseinrichtung 44, welche den Druckausgleich zwischen dem Druckraum 33 und der Umgebung sicherstellt und insbesondere eine Kompensation für Schwankungen des Umgebungsdrucks bewirkt. Die Druckausgleichseinrichtung 44 ist mittels einer Verstelleinheit 46 in ihrer Position verstellbar. Im dargestellten Beispiel umfasst die Verstelleinheit 46 einen Ring 48, welcher auf eine Mantelfläche 50 der Wandung 14 aufgeschoben werden kann. Hierzu weist der Ring 48 eine Innenfläche 52 auf, die beim Aufschieben mit der Mantelfläche 50 in Kontakt tritt. Die Gebrauchsstellung des Rings 48 auf dem Gehäuse 12 wird mit Positionierungsmitteln 54 festgelegt. Im dargestellten Beispiel umfassen die Positionierungsmittel 54 einen Anschlag 56, der als eine Stufe 57 der Wandung 14 ausgebildet ist. Darüber hinaus umfassen die Positionierungsmittel 54 einen Sicherungsring 58, der zusammen mit dem Anschlag 56 die axiale Position des Rings 48 festlegt.

In seiner Gebrauchsstellung, also dann, wenn der Ring 48 am Anschlag 56 anliegt, wirkt der Ring 48 mit einer Dichteinrichtung 60 zusammen, welche im dargestellten Beispiel einen ersten O-Ring 62 und einen zweiten O-Ring 64 aufweist, die einen Dichtraum 65 definieren, der zwischen den beiden O-Ringen 62, 64 liegt.
Im Dichtraum 65 weisen die Wandung 14 des Gehäuses 12 eine ringförmige Ausnehmung 66 auf, die in sich geschlossen ist und mit der Bohrung 42 kommuniziert. Die ringförmige Ausnehmung 66 wiederum kommuniziert mit der Druckausgleichseinrichtung 44, welche in einen Anschlussabschnitt 68 eingeschraubt ist. Im dargestellten Ausführungsbeispiel ist die ringförmige Ausnehmung 66 als umlaufende Ringnut ausgebildet, die in die Oberfläche 52 des Rings 48 eingebracht ist.

Um den Ring 48 auf die Mantelfläche 50 aufzuschieben, wird er über den Gehäuseadapter 38 geschoben. Vorderseitig ist an dem Gehäuse 12 ein Absatz 70 als Anschlag für den Ring 48 vorgesehen. Der Ring 48 weist an den beiden Enden seiner Innenfläche 52 jeweils eine Fase 74 auf, die einerseits das Aufschieben erleichtern und außerdem dafür sorgen, dass die beiden O-Ringe 62, 64 nicht beschädigt werden. Montagetechnisch ist zwar nur eine der Fasen 74 (die vordere) erforderlich, jedoch wird mit der dargestellten Ausführungsform erreicht, dass der Ring 48 nicht in einer bestimmten Orientierung montiert werden muss. Zudem kann der Ring 48 mittels der Fase 74 über den Sicherungsring 58 und weiter auf die Mantelfläche 50 geschoben werden, bis er am Anschlag 56 anliegt. Der Sicherungsring 58 ist so positioniert, dass der Ring 48 dann kein oder nur ein zu vernachlässigendes axiales Spiel hat, aber auf den beiden O-Ringen 62, 64 um die Längsachse A gedreht werden kann, so dass die Druckausgleichseinrichtung 44 so positioniert werden kann, dass sie bestmöglich vor Verschmutzungen geschützt ist.

Der Ring 48 selbst kann aus rostfreiem Stahl, vorzugsweise Edelstahl, spanend hergestellt sein. Alternativ kann er auch im Druckgussverfahren hergestellt sein, wozu jedoch geeignete Metallsorten verwendet werden müssen. Eine Herstellung im Spritzgussverfahren ist ebenfalls möglich, wobei ein Kunststoff- oder Pulverspritzgussverfahren zur Anwendung kommen kann. Beim Pulverspritzgussverfahren kann ein Edelstahlpulver verwendet werden.

### Bezugszeichenliste

- 10: Druckmessumformer
- 12: Gehäuse
- 14: Wandung
- 15: Hohlraum
- 16: Öffnung
- 18: Druckmesszelle

- 20: Gewindemuffe, Prozessanschluss
- 22: erstes Dichtungselement
- 23: Außengewinde
- 24: Stirnfläche
- 26: zweites Dichtungselement
- 28: Umwandlungseinheit

- 30: Leitungseinrichtung
- 32: Durchführungseinrichtung
- 33: Druckraum
- 34: Leitstab
- 36: Glasdurchführung
- 38: Gehäuseadapter

- 40: Hohlraum
- 42: Bohrung
- 44: Druckausgleichseinrichtung
- 46: Verstelleinheit
- 48: Ring

- 50: Mantelfläche
- 52: Innenfläche
- 54: Positionierungsmittel
- 56: Anschlag
- 57: Stufe

- 58: Sicherungsring

- 60: Dichteinrichtung
- 62: erster O-Ring
- 64: zweiter O-Ring
- 65: Dichtraum
- 66: ringförmige Ausnehmung, Ringnut
- 68: Anschlussabschnitt

- 70: Absatz
- 74: Fase

- A: Längsachse

## Patentansprüche

1. Druckmessumformer zum Bestimmen eines Drucks in einer Baueinheit, umfassend
- ein Gehäuse (12) mit einer Wandung (14), welche einen Hohlraum (15) umschließt,
- eine im Hohlraum (15) angeordnete Druckmesszelle (18) zum Bestimmen des in der Baueinheit anliegenden Drucks und zum Erzeugen von entsprechenden Signalen, wobei die Wandung (14) eine Öffnung (16) aufweist, über welche die Druckmesszelle mit dem in der Baueinheit anliegenden Druck beaufschlagbar ist, und wobei die Druckmesszelle (18) so im Hohlraum (15) angeordnet ist, dass auf der von der Öffnung (16) abgewandten Seite der Druckmesszelle (18) ein Druckraum (33) gebildet wird, in welchem ein zweiter Druck anliegt,
- eine mit der Druckmesszelle (18) zusammenwirkende Umwandlungseinheit (28) zum Umwandeln der Signale in elektrische Signale,
- eine elektrische Leitungseinrichtung (30) zum Weiterleiten der elektrischen Signale von der Druckmesszelle (18) an eine Auswerteeinheit, und
- eine druckdichte Durchführungseinrichtung zum Durchführen der elektrischen Leitungseinrichtung (30) durch die Wandung (14),
**dadurch gekennzeichnet, dass** eine die Wandung (14) durchlaufende Bohrung (42) vorgesehen ist, welche mit dem Druckraum (33) und einer mittels einer Verstelleinheit (46) in ihrer Position verstellbaren Druckausgleichseinrichtung (44) kommuniziert.

2. Druckmessumformer nach Anspruch 1,
**dadurch gekennzeichnet, dass** die Verstelleinheit (46) einen die Wandung (14) umgreifenden Ring (48) umfasst.

3. Druckmessumformer nach Anspruch 2,
**dadurch gekennzeichnet, dass** der Ring (48) mit einer Dichteinrichtung (60) derart zusammenwirkt, dass die Bohrung (42) gegenüber dem Ring (48) abdichtbar ist.

4. Druckmessumformer nach einem der Ansprüche 2 oder 3,
**dadurch gekennzeichnet, dass** die Wandung (14) eine im Wesentlichen hohlzylindrische Form mit einer Mantelfläche (50) aufweist und der Ring (48) auf die Mantelfläche (50) aufschiebbar ist.

5. Druckmessumformer nach Anspruch 4,
**dadurch gekennzeichnet, dass** der Ring (48) um eine Längsachse (A) des Hohlraums (15) drehbar gelagert ist.

6. Druckmessumformer nach einem der Ansprüche 3 bis 5,
**dadurch gekennzeichnet, dass** die Dichteinrichtung (60) einen ersten O-Ring (62) und einen zweiten O-Ring (64) umfasst, die einen Dichtraum (65) definieren, der mit der Bohrung (42) kommuniziert.

7. Druckmessumformer nach Anspruch 6,
**dadurch gekennzeichnet, dass** die Wandung (14) im Dichtraum (65) eine erste ringförmige Ausnehmung (66) aufweist.

8. Druckmessumformer nach einem der Ansprüche 6 oder 7,
**dadurch gekennzeichnet, dass** der Ring (48) eine zweite ringförmige Ausnehmung aufweist, die im Dichtraum (65) angeordnet ist, wenn sich der Ring (48) in seiner Gebrauchsstellung befindet.

9. Druckmessumformer nach einem der Ansprüche 2 bis 8,
**dadurch gekennzeichnet, dass** der Ring (48) mit Positionierungsmitteln (54) in seiner Gebrauchsstellung positioniert wird.

10. Druckmessumformer nach Anspruch 9,
**dadurch gekennzeichnet, dass** die Positionierungsmittel (54) einen Anschlag umfassen, gegen den der Ring (48) in seiner Gebrauchsstellung anschlägt.

11. Druckmessumformer nach einem der Ansprüche 9 oder 10,
**dadurch gekennzeichnet, dass** die Positionierungsmittel (54) einen oder mehrere Sicherungsringe (58) umfassen, mit welchem der Ring (48) in seiner Gebrauchsstellung fixierbar ist.

12. Druckmessumformer nach einem der Ansprüche 2 bis 11,
**dadurch gekennzeichnet, dass** der Ring (48) einen Anschlussabschnitt (68) umfasst, an den die Druckausgleichseinrichtung (44) befestigbar oder mit dem der Ring (48) mit einer weiteren Baueinheit verbindbar ist.

13. Druckmessumformer nach einem der vorherigen Ansprüche,
**dadurch gekennzeichnet, dass** die Druckmesszelle (18) in einer auf das Gehäuse (12) aufschraubbaren Gewindemuffe (20) angeordnet ist.

14. Druckmessumformer nach einem der Ansprüche 2 bis 13,
**dadurch gekennzeichnet, dass** der Ring (48) aus rostfreiem Stahl, insbesondere aus rostfreiem Edelstahl oder im Spritz- oder Druckgussverfahren hergestellt ist

15. Druckmessumformer nach Anspruch 14,
**dadurch gekennzeichnet, dass** das Spritzgussverfahren als Kunststoffspritzguss- oder Pulverspritzgussverfahren ausgebildet ist.

## Claims

1. Pressure transducer for determining a pressure in an assembly, comprising
- a housing (12) having a wall (14) enclosing a cavity (15),
- a pressure measurement cell (18) arranged in the cavity (15) for determining the pressure acting in the assembly and for generating corresponding signals, wherein the wall (14) has an opening (16), through which the pressure acting in the assembly can be applied to the pressure measurement cell, and wherein the pressure measurement cell (18) is arranged in the cavity (15) in such a way that a pressure chamber (33) is formed on the side of the pressure measurement cell (18) facing away from the opening (16), in which a second pressure is applied,
- a conversion unit (28) working together with the pressure measurement cell (18) for converting the signals into electrical signals,
- an electrical transmission device (30) for forwarding the electrical signals from the pressure measurement cell (18) to an evaluation unit, and
- a pressure-tight electrical feedthrough device for leading the electrical transmission device (30) through the wall (14), **characterized in that** a borehole (42) passing through the wall (14) is provided, which communicates with the pressure chamber (33) and a pressure compensation device (44) adjustable in its position using an adjustment unit (46).

2. Pressure transducer according to claim 1,
**characterized in that** the adjustment unit (46) comprises a ring (48) encompassing the wall (14).

3. Pressure transducer according to claim 2,
**characterized in that** the ring (48) works together with a seal device (60) in such a way that the borehole (42) is sealable with respect to the ring (48).

4. Pressure transducer according to one of the claims 2 or 3,
**characterized in that** the wall (14) has an essentially hollow cylindrical form with a lateral surface (50) and the ring (48) can be push-fit on the lateral surface (50).

5. Pressure transducer according to claim 4,
**characterized in that** the ring (48) is rotatable around a longitudinal axis (A) of the cavity (15).

6. Pressure transducer according to one of the claims 3 to 5,
**characterized in that** the seal device (60) comprises a first O-ring (62) and a second O-ring (64) that define a seal chamber (65) which communicates with the borehole (42).

7. Pressure transducer according to claim 6,
**characterized in that** the wall (14) comprises a first ringshaped recess (66) in the seal chamber (65).

8. Pressure transducer according to one of the claims 6 or 7,
**characterized in that** the ring (48) comprises a second ringshaped recess which is arranged in the seal chamber (65) when the ring (48) is located in its position of use.

9. Pressure transducer according to one of the claims 2 to 8,
**characterized in that** the ring (48) is positioned in its position of use using positioning means (54).

10. Pressure transducer according to claim 9,
**characterized in that** the positioning means (54) comprise a stopper against which the ring (48) butts in its position of use.

11. Pressure transducer according to one of the claims 9 or 10,
**characterized in that** the positioning means (54) comprise one or several locking rings (58) by means of which the ring (48) is fixable in its position of use.

12. Pressure transducer according to one of the claims 2 to 11,
**characterized in that** the ring (48) comprises a connection section (68) to which the pressure compensation device (44) can be fastened or by means of which the ring (48) can be connected with another assembly.

13. Pressure transducer according to one of the preceding claims,
**characterized in that** the pressure measurement cell (18) is arranged in a threaded sleeve (20) that can be screwed on the housing (12).

14. Pressure transducer according to one of the claims 2 to 13,
**characterized in that** the ring (48) is made of stainless steel, in particular of stainless high-grade steel or in an injection molding or a die-casting process.

15. Pressure transducer according to claim 14,
**characterized in that** the injection molding process is designed as a plastic injection molding or a powder injection molding process.

## Revendications

1. Convertisseur de pression pour déterminer une pression dans une unité physique, comprenant
- un boîtier (12) ayant une paroi (14) qui enserre une cavité (15),
- une cellule de mesure de pression (18) disposée dans la cavité (15) pour déterminer la pression attenante dans l'unité physique et pour générer des signaux correspondants, la paroi (14) comportant une ouverture (16), à travers laquelle la pression attenante dans l'unité physique peut être appliquée sur la cellule de mesure de pression, et la cellule de mesure de pression (18) étant arrangée dans la cavité (15) de telle sorte que sur le côté de la cellule de mesure de pression (18) opposé à l'ouverture (16) une chambre de pression (33) est formée, dans laquelle une seconde pression est appliquée,
- une unité de conversion (28) coopérant avec la cellule de mesure de pression (18) pour convertir les signaux en signaux électriques,
- un dispositif électrique de guidage (30) pour transmettre les signaux électriques de la cellule de mesure de pression (18) à un dispositif d'évaluation, et
- un dispositif de traversée étanche à la pression pour mener le dispositif électrique de guidage (30) à travers la paroi (14),
**caractérisé en ce qu'**un alésage (42) traversant la paroi (14) est prévu, qui communique avec la chambre de pression (33) et un dispositif d'équilibrage de pression (44) dont la position est réglable à l'aide d'une unité de réglage (46).

2. Convertisseur de pression selon la revendication 1, **caractérisé en ce que** l'unité de réglage (46) comprend une bague (48) enveloppant la paroi (14).

3. Convertisseur de pression selon la revendication 2,
**caractérisé en ce que** la bague (48) coopère avec un dispositif d'étanchéité (60) de telle façon que l'alésage (42) peut être rendu étanche vis-à-vis de la bague (48).

4. Convertisseur de pression selon l'une des revendications 2 ou 3,
**caractérisé en ce que** la paroi (14) a essentiellement la forme d'un cylindre creux ayant une surface latérale (50) et la bague (48) peut être emmanchée sur la surface latérale (50).

5. Convertisseur de pression selon la revendication 4,
**caractérisé en ce que** la bague (48) est montée en rotation autour de l'axe longitudinal (A) de la cavité (15).

6. Convertisseur de pression selon l'une des revendications 3 à 5,
**caractérisé en ce que** le dispositif d'étanchéité (60) comprend un premier joint torique (62) et un second joint torique (64) qui définissent une chambre d'étanchéité (65) qui communique avec l'alésage (42).

7. Convertisseur de pression selon la revendication 6,
**caractérisé en ce que** la paroi (14) comprend un premier évidement annulaire (66) dans la chambre d'étanchéité (65).

8. Convertisseur de pression selon l'une des revendications 6 ou 7,
**caractérisé en ce que** la bague (48) comprend un second évidement annulaire qui est aménagé dans la chambre d'étanchéité (65) quand la bague (48) se trouve dans sa position d'utilisation.

9. Convertisseur de pression selon l'une des revendications 2 à 8,
**caractérisé en ce que** la bague (48) est positionnée dans sa position d'utilisation par la biais de moyens de positionnement (54).

10. Convertisseur de pression selon la revendication 9,
**caractérisé en ce que** les moyens de positionnement (54) comprennent une butée contre laquelle la bague (48) bute dans sa position d'utilisation.

11. Convertisseur de pression selon l'une des revendications 9 ou 10,
**caractérisé en ce que** les moyens de positionnement (54) comprennent une ou plusieurs bagues de blocage (58) grâce auxquelles la bague (48) peut être fixée dans sa position d'utilisation.

12. Convertisseur de pression selon l'une des revendications 2 à 11,
**caractérisé en ce que** la bague (48) comprend une partie de raccordement (68) à laquelle le dispositif d'équilibrage de pression (44) peut être fixé ou grâce à laquelle la bague (48) peut être reliée à une autre unité physique.

13. Convertisseur de pression selon l'une des revendications précédentes,
**caractérisé en ce que** la cellule de mesure de pression (18) est disposée dans un manchon fileté (20) pouvant être vissé sur le boîtier (12).

14. Convertisseur de pression selon l'une des revendications 2 à 13,
**caractérisé en ce que** la bague (48) est fabriquée en acier inoxydable, en particulier en acier inoxydable de grande qualité ou par le procédé de moulage par injection ou sous pression.

15. Convertisseur de pression selon la revendication 14,
**caractérisé en ce que** le procédé de moulage par injection est un procédé de moulage par injection plastique ou de moulage par injection de poudre.
